# EUROPEAN PATENT APPLICATION

(11) **EP 1 881 261 A1**
(43) Date of publication of application: **23.01.2008**
(21) Application number: 06741815.2
(22) Date of filing: 09.05.2006
(51) Int. Cl.: F21S 6/00, F21S 8/00, F21S 9/02, G08B 13/18, G08B 19/00, G08B 21/12, F21W 131/00, F21Y 101/02

(54) **EMERGENCY AND ALARM LAMP WITH A VIDEO CAMERA**

(30) Priority: 09.05.2005 CN 200520018059 U
(71) Applicant: Chan, Sze Keun, Hong Kong 10000 (CN)
(72) Inventor: Chan, Sze Keun, Hong Kong 10000 (CN)
(74) Representative: Craske, Stephen Allan
(86) International application number: PCT/CN2006/000921
(87) International publication number: WO 2006/119701

(57) **Abstract**

An emergency and alarm lamp with a video camera comprises a lamp head, a lamp house, and a lamp casing. The lamp head is a metal head with a general screw interface or a bayonet interface that can be fit on a lamp holder of a general filament lamp. The lamp house is provided with a rechargeable battery, a manual/auto controller, a speech module, a speaker, a direct current converter, a controller, a power-cut inductor and a display for battery capacity. A hole is positioned on the central of the lamp casing, and a gas sensor is provided below the hole. A plurality of LEDs are arranged on two PCBs provided on the left and right sides of the lamp casing, respectively. A red LED flasher is arranged on the each PCB and covered with a transparent shield. Two human body detectors are arranged at the left-most end and the right-most end respectively. Between the two transparent shields, there is a filter in which there is a video camera.

## Description

### TECHNICAL FIELD

This invention relates to a lamp and more particularly to a LED lamp, which comprises rechargeable battery, power-cut inductor, human body detector, gas sensor, and which has camcorder, alarm or emergency functionalities.

### BACKGROUND ART

At present, the lamp uses generic power from the transformer. When the power is on, the lamp works; while the power is cut off, the lamp just can not work. Moreover, the current lamp only has a single lighting function; some lamp with sound and human body sensor can only control the on/off of the lamp to save power. Nowadays, such safety protection facilities as gas alert, camcorder are installed in the workplace or houses. So if we can combine all these functionalities into one lamp, we can save the cost and reduce the trouble of duplicated installation. Furthermore, lamps have been installed everywhere, when the lamp has multi-functions, like lighting, alert, gas sensor, human detect, it will do great help to the people in emergency.

### DISCLOSURE OF INVENTION

It is, therefore, an object of the invention, to solve the present technical shortage and to provide a kind of LED lamp with rechargeable battery, which can keep the power and supply the lamp when the power is cut off.

It is another object of the invention to provide the power-cut inductor, which will send the message to CPU and make the alert, reminding users to turn off the electric utensil at the time of power-cut.

It is another object of the invention to provide the human body detector, which will send signal to CPU when it detects that the human is in the detection area at the emergency. The CPU will send the lighting signal to lamp to light and alarm to remind that the human is in danger.

It is another object of the invention to provide the gas sensor, which will send signal to CPU when it sensed the hazardous gas in the certain area. The CPU then controls the speech module to send out alarm and trigger the red LED to flash.

It is another object of the invention to provide the mechatronic camera, taking the track recording or timed recording.

These objects are accomplished by a lamp holder, a lamp house, and a lamp casing. The lamp holder is a metal holder with a general screw interface or a bayonet interface that can be fit on a holder of a general filament lamp. The lamp house is provided with a rechargeable battery, a manual/auto controller, a speech module, a speaker, a direct current converter, a controller, a power-cut inductor and a display for battery capacity. A hole is positioned on the central of the lamp casing, and a gas sensor is provided below the hole. A plurality of LEDs are arranged on two PCBs provided on the left and right sides of the lamp casing, respectively. A red LED flasher is arranged on the each PCB and covered with a transparent shield. Two human body detectors are arranged at the left-most end and the right-most end respectively. Between the two transparent shields, there is a filter in which there is a video camera.

Within the invention, the rechargeable battery is used to keep the power and supply the lamp at the time of power-cut. After AC power turns into DC power through the direct current converter, it will charge the battery by the controller. The CPU will detect the battery capacity and decide if it will charge the battery or not. The CPU and the controller will exchange the signal for on/off of battery charge. The DC power will supply other modules through the controller. When the power is cut off, the controller will trigger the battery supply in 0.5 second (configurable).

Within the invention, the power-cut inductor is used to power-cut detection, which will send the message to CPU at the time of power-cut and trigger the speech module in a configured timeframe, then the speaker sends out the alert, the red LED flashes, reminding users to turn off the electric utensil and avoid the danger.

Within the invention, the human body detector is used to detect human body, which can be ultrasonic detector or infrared detector. When there is human body in the detection area, the camera will record. The detector will send signal to CPU when it detects that the human is in the detection area at the emergency. The CPU will trigger the speech module, then the speaker sends out the alarm, the red LED flashes, alerting that the human is in dangerous area and should exit as soon as possible or informing the people outside the human existence inside.

Within the invention, the gas sensor is used to sense the hazardous gas in a certain area. When the hazardous gas occurs and reaches the sensor through the hole, the sensor will send message to CPU. The CPU will trigger the speech module, then the speaker sends out the alarm, the red LED flashes, alerting that the human is in hazardous gas area and needs to take effective measurements to avoid the danger of life.

Within the invention, the camera is mechatronic camera. When human body detector sends the human existence signal to CPU, the CPU will give signal to camera controller, drive the motor M1 to correct direction and the motor M2 to correct angel and focus, taking the track record or timed record.

Within the invention, manual/auto controller is to adjust the lighting angel, send the alarm or turn on/off the power automatically or manually. Radio receiver is to receive the radio signal and data. The LED can be replaced by LED chip or any other lighting components. The speech module has pre-configured speech or specific alarm sound. The speaker can be buzzer or electromagnetic or mini speaker.

In the said invention, the CPU can transmit via the power cord the data from the human body detector and camera to the certain facilities. The lamp holder can be currently used generic ones, so no replacement is needed. Because the large capacity rechargeable battery is used, it can be used when the power is cut off; moreover, because it is multi-functional, it can be taken off from the lamp holder and used as a portable lighting, detecting or alarming tool.

For the better understanding of the said invention, the objects, characteristics and advantages of the said invention can be illustrated in details through drawing and carrying-outs.

### BRIEF DESCRIPTION OF THE DRAWINGS

FIG. 1 is a structure chart of the invention
FIG. 2 is a structure chart of the other carrying-out of the invention
FIG. 3 is the circuit diagram of the invention

In these figures, 1 .lamp head; 2 .lamp house; 3 .lamp casing; 4 .transparent shield; 5 .rechargeable battery; 6 .manual/auto controller; 7 .speech module; 8 . speaker; 9 .direct current converter; 10 .controller; 11 .power-cut inductor; 12 .display for battery capacity; 13 .human body detector; 14 .gas sensor; 15 .hole; 16 .regulator; 17 .PCB; 18 .red LED ; 19 .white LED ; 20 .video camera; 21 filter; 22 .CPU; 23 .radio receiver

### BEST MODE FOR CARRYING OUT THE INVENTION

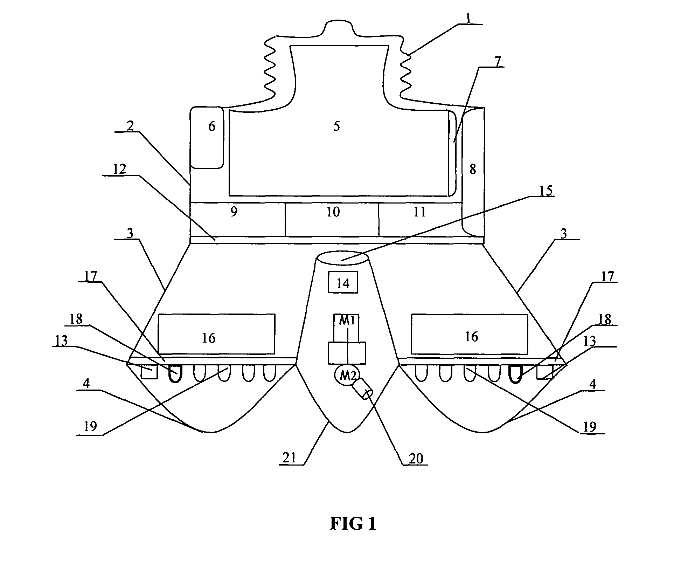

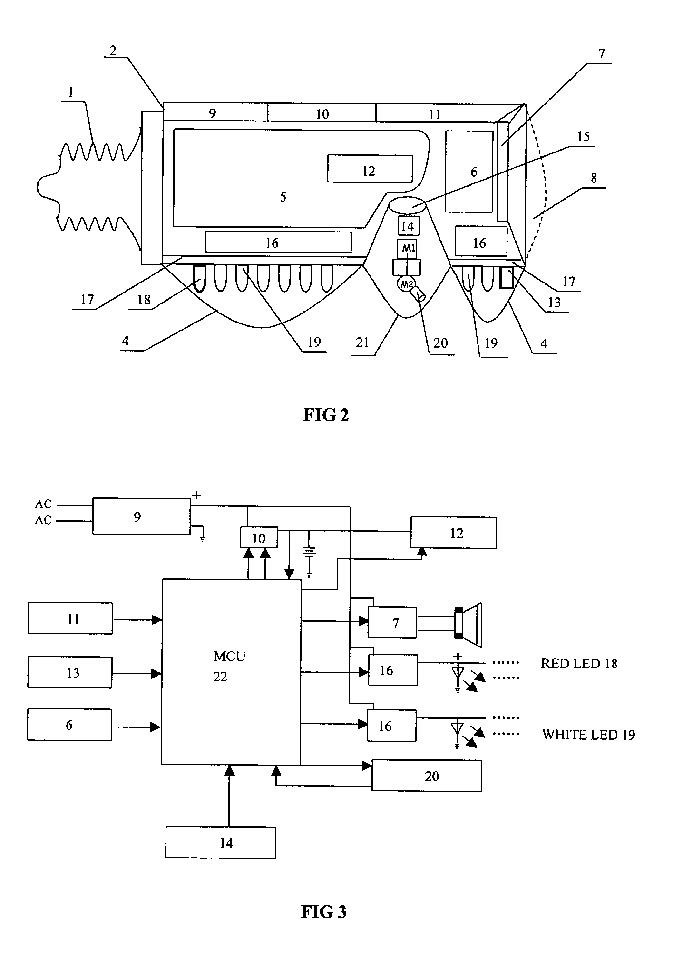

There is shown in FIG. 1 and 2, the invention comprises lamp head(1), lamp house(2), lamp casing(3), transparent shield(4) which is featured in: the lamp head(1) is a general screw interface or a bayonet interface that can be fit on a holder of a general filament lamp; the lamp house(2) has rechargeable battery(5), manual/auto controller(6), radio receiver(23), speech module(7), speaker(8), direct current converter(9), controller(10), power-cut inductor(11) and battery capacity display(12) installed inside; the lamp casing(3) has a vent hole(15) in the middle, under which, the gas sensor(14) is installed. A plurality of LEDs are installed on the PCBs (17) of both sides respectively, among which, there is one red LED(18) installed on each side. LEDs are covered with transparent shield(4). Two human body detectors(13) are arranged at the left-most end and the right-most end respectively. Between the two transparent shield(4)s, there is a filter(21) in which there is a video camera(20).

The said lamp house(2) is made of insulating materials. The said lamp casing(3) is made of heat conductive material.

The said rechargeable battery(5) is used to keep the power and supply the lamp at the time of power-cut. After AC power turns into DC power through the direct current converter(9), it will charge the battery by the controller(10). The CPU(22) will detect the battery capacity and decide if it will charge the battery or not. The CPU and the controller will exchange the signal for on/off of battery charge. When the charge is off, the battery capacity display(12) shows the battery is full. The DC power will supply other modules through the controller(10). When the power is cut off, the controller(10) will trigger the battery supply in 0.5 second (configurable). The solar power or other kind of power can also be used in the invention.

The said power-cut inductor(11) is used to power-cut detection, which will send the message to CPU(22) at the time of power-cut and trigger the speech module(7) in a configured timeframe, then the speaker(8) sends out the alert, the red LED(18) turns on and flashes, reminding users to turn off the electric utensil and avoid the danger.

The said human body detector(13) is used to detect human body, which can be ultrasonic detector or infrared detector. The detector(13) will send signal to CPU(22) when it detects that the human body is in the detection area at the emergency. The CPU(22) will trigger the speech module(7), then the speaker(8) sends out the alarm, the red LED(18) turns on and flashes, alerting that the human is in dangerous area and should exit as soon as possible or informing the people outside the human existence inside.

The said gas sensor(14) is used to sense the hazardous gas in a certain area. When the hazardous gas occurs and reaches the sensor(14) through the hole(15), the sensor(14) will send message to CPU(22). The CPU(22) will trigger the speech module(7), then the speaker(8) sends out the alarm, the red LED flashes(18), alerting that the human is in hazardous gas area and needs to take effective measurements to avoid the danger of life.

The said camera(20) is mechatronic camera. When human body detector(13) sends the human existence signal to CPU(22), the CPU will give signal to camera(20) controller, drive the motor M1 to correct direction and the motor M2 to correct angel and focus, taking the track record or timed record.

The said manual/auto controller(6) is to adjust the lighting angel, send the alarm or turn on/off the power automatically or manually. The said radio receiver(23) is to receive the radio signal and data. The said speech module(7) is 1000 HZ speech module and has pre-configured speech or specific alarm sound. The said speaker(8) can be buzzer or electromagnetic or mini speaker, which will receive the data transmitted from speech module(7). The said regulator(16) is connected with PCB(17), protecting LED(18) and LED(19) from wrong voltage. The said red LED(18) and white LED(19) can be replaced by LED chip or any other lighting components, the said white LED(19) can be replaced by other colors except red. The said LED(19) or LED chips can be integrated on or in an astigmatism plate to acquire even lighting.

The lamp of the said invention can be can be made into such shape as ceiling lamp panel or pendant lamp.

In the said invention, the lamp holder can be currently used generic ones, so no replacement is needed. Because the large capacity rechargeable battery is used, it can be used when the power is cut off; moreover, because it is multi-functional, it can be taken off from the lamp holder and used as a portable lighting, detecting or alarming tool.

The said invention follows the tendency of the diversity development of future lighting products and certainly has a great market value. While there have been shown and described above what are at present considered to be the preferred carrying out of the invention, it will be apparent to those skilled in the art that various changes and modification can be made herein without departing from the scope of the invention as defined by the appended claims.

## Claims

1. An emergency and alarm lamp with a video camera, which comprises lamp holder(l), lamp house(2), lamp casing(3), transparent shield(4). The features are: the lamp head(1) is a general screw interface or a bayonet interface that can be fit on a lamp holder of a general filament lamp; the lamp house(2) has rechargeable battery(5), manual/auto controller(6), radio receiver(23), speech module(7), speaker(8), direct current converter(9), controller(10), power-cut inductor(11) and battery capacity display(12) installed inside; the lamp casing(3) has a vent hole(15) in the middle, under which, the gas sensor(14) is installed. A plurality of LEDs are installed on the PCBs (17) of both sides respectively, among which, there is one red LED(18) installed on each side. LEDs are covered with transparent shield(4). Two human body detectors(13) are arranged at the left-most end and the right-most end respectively. Between the two transparent shield(4)s, there is a filter(21) in which there is a video camera(20).

2. An emergency and alarm lamp with a video camera of claim 1 is **characterized in that**, the said rechargeable battery(5) is connected with direct current converter(9) by controller(10).

3. An emergency and alarm lamp with a video camera of claim 1 is **characterized in that**, the said power-cut inductor(11) is connected with CPU(22).

4. An emergency and alarm lamp with a video camera of claim 1 is **characterized in that**, the said human body detector(13) is connected with CPU(22).

5. An emergency and alarm lamp with a video camera of claim 1 is **characterized in that**, the said gas sensor(14) is connected with CPU(22).

6. An emergency and alarm lamp with a video camera of claim 1 is **characterized in that**, the said camera(20) is mechatronic one, which has motor M1 and M2 installed.

7. An emergency and alarm lamp with a video camera of claim 1 is **characterized in that**, the said speech module(7) is 1000Hz speech signal module.

8. An emergency and alarm lamp with a video camera of claim 1 is **characterized in that**, the speaker(8) is buzzer or electromagnetic or mini speaker

9. An emergency and alarm lamp with a video camera of claim 1 is **characterized in that**, the said regulator(16) is connected with PCB(17), red LED(18) and white LED(19).

10. An emergency and alarm lamp with a video camera of claim 1 is **characterized in that**, the said red LED(18) and white LED(19) can be replaced by LED chip or any other lighting components, the said white LED(19) can be replaced by other colors except red.
